**Europäisches Patentamt**

**European Patent Office**

**Office européen des brevets**

(11) Veröffentlichungsnummer: **0 345 367**
**A1**

## (12) EUROPÄISCHE PATENTANMELDUNG

(21) Anmeldenummer: **88109112.8**

(22) Anmeldetag: **08.06.88**

(51) Int. Cl.⁴: **B29D 29/08 , F16G 1/28**

(43) Veröffentlichungstag der Anmeldung:
**13.12.89 Patentblatt 89/50**

(84) Benannte Vertragsstaaten:
**AT BE CH DE ES FR GB GR IT LI LU NL SE**

(71) Anmelder: **OLBO Textilwerke GmbH**
**Aachener Strasse 5**
**D-5650 Solingen 11(DE)**

(72) Erfinder: **Alker, Heinrich, Dipl.Ing.**
**Am Eichelkamp 219**
**D-4010 Hilden(DE)**
Erfinder: **Walter, Michael**
**Am Krüppershaus 3c**
**D-5600 Wuppertal 1(DE)**
Erfinder: **Haas, Michael**
**Kurlandstrasse 32**
**D-5600 Wuppertal 11(DE)**

(74) Vertreter: **Türk, Gille, Hrabal**
**Bruckner Strasse 20**
**D-4000 Düsseldorf 13(DE)**

(54) **Verfahren zum Herstellen von Zahnriemen od.dgl. und danach hergestellter Zahnriemen.**

(57) Zum Herstellen von Zahnriemen wird auf eine den Zahnformen entsprechende Vertiefungen enthaltende endlose Unterlage ein in Längsrichtung dehnbares textiles Flächengebilde glatt aufgelegt, auf das man Kautschuk aufbringt. Danach wird ein litzenförmiger Zugkörper unter Zugspannung endlos auf den Kautschuk aufgewickelt und dabei der Kautschuk mit dem textilen Flächengebilde unter Längsdehnung desselben in die Vertiefungen der Unterlage gedrückt. Schließlich wird eine den Zugkörper überdeckende Rückenschicht aus Kautschuk aufgebracht und das Ganze dann vulkanisiert. Das textile Flächengebilde enthält plastisch verformbare, sich in Längsrichtung des Zahnriemens erstreckende Fäden, die sich beim Dehnen des textilen Flächengebildes dauerhaft längen, und in Querrichtung verlaufende verschleißfeste Fäden. Als Haftmittel zwischen dem textilen Flächengebilde und dem Kautschuk bzw. Gummi der Zähne des Zahnriemens wird entweder vor dem Aufbringen des Kautschuks auf das über die Vertiefungen der Unterlage gespannte textile Flächengebilde Latex aufgebracht oder das textile Flächengebilde vor dem Auflegen auf die Unterlage mit Latex imprägniert.

FIG.1

## Verfahren zum Herstellen von Zahnriemen od.dgl. und danach hergestellter Zahnriemen

Die Erfindung betrifft ein Verfahren zum Herstellen von Zahnriemen und ähnlichen endlosen Gegenständen, bei dem auf eine endlose Unterlage, welche den Zahnformen entsprechende Vertiefungen enthält, ein in Längsrichtung dehnbares textiles Flächengebilde glatt und somit leicht gespannt aufgelegt, auf dieses textile Flächengebilde Kautschuk aufgebracht, danach ein litzenförmiger Zugkörper unter Zugspannung endlos auf den Kautschuk aufgewickelt und dabei der Kautschuk mit dem textilen Flächengebilde unter Längsdehnung des Flächengebildes in die Vertiefungen der Unterlage gedrückt wird, woraufhin eine den Zugkörper überdeckende Rückenschicht aus Kautschuk aufgebracht und das Ganze schließlich vulkanisiert wird.

Außerdem betrifft die Erfindung einen Zahnriemen oder ähnlichen endlosen Gegenstand, der einen aus Gummi bestehenden Körper mit glattem Rücken und einer gezahnten Innenseite aufweist, in den ein kabel- oder litzenförmiger Zugkörper eingebettet ist und dessen Zähne auf ihrer Oberfläche mit einem als Verschleißschicht dienenden textilen Flächengebilde versehen sind.

Bei bekannten endlosen Zahnriemen verwendet man als Verschleißbeschichtung für die Oberfläche der Zähne ein elastisch dehnbares Gewebe, beispielsweise Nylongewebe, bei dem die Schußfäden aus texturiertem Material bestehen und dem Gewebe dadurch die elastische Dehnbarkeit verleihen. Es hat sich jedoch gezeigt, daß sich dieses Gewebe beim Ausformen der Zähne nicht exakt der Oberfläche der Zähne anpaßt, was auf die elastische Dehnbarkeit und die damit verbundene Rückstellneigung zurückzuführen ist und auch darauf, daß die elastische Dehnbarkeit nach der erfolgten Formung der Zähne sozusagen "eingefroren" werden muß. Besonders im Fußbereich der Zähne derartiger Zahnriemen ergeben sich Probleme und Schwachstellen, die leicht zum Abreißen ganzer Zähne führen können. Der Erfindung liegt die Aufgabe zugrunde, Zahnriemen od.dgl. derart herstellen zu können, daß in einfacher Weise eine genaue Zahnform zu erzielen ist, die über den gesamten Zahnquerschnitt und insbesondere auch im Fußbereich gleichförmige Festigkeit und Verschleißbeständigkeit aufweist.

Diese Aufgabe wird bei einem Verfahren der eingangs genannten Gattung mit den Merkmalen des kennzeichnenden Teiles des Patentanspruches 1 gelöst. Vorteilhafte Ausgestaltungen des Verfahrens sind Gegenstand der Unteransprüche 2 bis 5. Außerdem wird diese Aufgabe bei einem Zahnriemen od.dgl. der eingangs genannten Gattung gelöst, welcher die kennzeichnenden Merkmale des Anspruches 6 aufweist. Vorteilhafte Ausgestaltungen dieses Zahnriemens sind Gegenstand der Unteransprüche 7 bis 9.

Als Verschleißbeschichtung der Zähne eines endlosen Zahnriemens od.dgl. wird nicht ein elastisch dehnbares Gewebe benutzt, sondern ein Gewebe, das sich in einer Richtung, nämlich in Längsrichtung des Zahnriemens, derart längen kann, daß es sich beim Formen der Zähne genau der Kontur der hierzu benutzten Form anpaßt und keine Rückstellneigung zeigt. Durch die Verwendung plastisch dehn- oder streckbarer Fäden als Schußfäden im Gewebe ist außerdem eine gleichförmige Dehnung des Gewebes in Längsrichtung des Zahnriemens gewährleistet, so daß dieses Gewebe auch eine gleichförmige Verschleißbeschichtung liefert. Selbst in dem sehr kritischen Fußbereich der Zähne, d.h. im Bereich des überganges von den Zahnflanken zum Hauptkörper des Zahnriemens, ergeben sich keine Schwachstellen in der Verschleißbeschichtung und an den Zähnen selbst.

Dabei kann zur Verbesserung der Verbindung zwischen der Verschleißschicht und dem Gummimaterial des Zahnriemens Latex eingesetzt werden, was bei Verwendung eines elastisch dehnbaren Gewebes, dessen dehnbare Fäden texturierte Fäden sind, nicht gut möglich ist, weil Latex den elastisch dehnbare Fäden eines Gewebes die Dehnbarkeit nimmt, wenn man des Gewebe vor dem Einbauen in den Zahnriemen mit Latex beschichtet oder gar imprägniert. Bei Verwendung plastisch dehnbarer oder streckbarer Fäden, wie durch die vorliegende Erfindung vorgeschlagen, übt Latex auf die Dehnbarkeit des Gewebes keinen nachteiligen oder hemmenden Einfluß aus. Als plastisch dehnbare Komponente können Fäden oder Garne aus teilverstrecktem Material wie Nylon 6.6 und Polyester oder anderen Polymeren benutzt werden, wobei dieses Material vor dem Verformen des Gewebes bei der Herstellung der Zahnriemen eine praktisch kraftlose Dehnung von mindestens 50 % der Fadenlänge aufweisen sollte und erst danach sich ein spürbarer Wiederstand gegen weitere Dehnung einstellen soll. Die Bruchdehnung der plastisch verformbaren Fäden soll vorzugsweise wenigstens 140 % und noch besser wenigstens 150 % oder noch höher sein.

Die plastisch dehnbaren Fäden können Fäden, Filamente oder auch Garne sein. Das Material ist zweckmäßig schon teilweise verstreckt bzw. vorverstreckt, jedoch ist wichtig, daß diese Fäden im Gewebe vor dem Einbau die gewünschte weitere Dehnbarkeit aufweisen.

Zweckmäßig wird das textile Flächengebilde vor dem Einbau mit einem RFL-System ausgerüstet, d.h. mit einem Resozin-Formaldehyd-Latex. Latex ist besonders gummifreundlich, beeinflußt jedoch die plastische Dehnbarkeit oder Streckbarkeit von mit ihm beschichteten plastisch dehnbarem Fadenmaterial nicht. Vielmehr ist auch bei einem entsprechend ausgerüsteten Gewebe eine hohe Dehnbarkeit gewährleistet.

Nach einem weiteren Merkmal der Erfindung können hitzeresistente Materialien (HR-Materialien) in der Verschleißschicht verwendet werden, die schon beim Spinnen von Fäden beigemischt werden können.

Durch die Erfindung ist es auch möglich, die Latex-Komponente passend zum jeweils verwendeten Kautschuk einzustellen, um die Haftung zwischen dem textilen Flächengebilde und dem vulkanisiertem Gummi noch weiter zu verbessern.

In der Kette eines als Gewebe ausgebildeten textilen Flächengebildes können Garne, Fäden oder Filamente aus natürlichen, künstlichen und synthetischen Fasern und/oder Faserstoffen verwendet werden, welche die gewünschte Verschleißfestigkeit aufweisen.

Das als Verschleißauflage für die Zähne verwendete textile Flächengebilde kann ein Gewebe, ein Gelege oder eine Wirkware sein, jedoch sind auch andere textile Flächengebilde verwendbar. Entscheidend ist, daß dieses textile Flächengebilde in mindestens einer Richtung die gewünschte plastische Dehnbarkeit aufweist, die es gestattet, das Flächengebilde bei der Formung der Zähne des Zahnriemens od.dgl. so plastisch zu dehnen, daß es sich der Zahnform exakt anpaßt und die Bildung der Zähne nicht behindert oder begrenzt.

Durch die Erfindung ist es möglich, die beispielsweise aus Neopren bestehenden Zähne eines Zahnriemens bedeutend zu verstärken und auch besser als bei Verwendung von elastisch dehnbaren Geweben zu schützen. Dies gilt insbesondere auch im Fußbereich der Zähne, der für Fehler besonders anfällig ist. Somit erhält man durch die Erfindung ein Produkt wie einen Zahnriemen, der eine hohe Festigkeit und Belastbarkeit aufweist und somit eine größere Lebensdauer als bisher bekannte Zahnriemen hat. Diese Vorteile werden nicht mit erhöhtem Aufwand erkauft, denn ein plastisch dehnbares textiles Flächengebilde verursacht keine höheren Herstellungskosten wie ein elastisch dehnbares Gewebe. Auch die Verwendung von Latex als Haftmittel zwischen dem textilen Flächengebilde und dem Gummimaterial des Zahnriemens verursacht keine höheren Kosten als bisher eingesetzte Haftmittel. Durch die Erfindung erhält man also in wirtschaftlicher Weise ein gegenüber vorbekannten endlosen Zahnriemen verbessertes und verstärktes Produkt.

Zur weiteren Erläuterung der Erfindung ist in der Zeichnung ein Ausführungsbeispiel eines erfindungsgemäß ausgestalteten endlosen Zahnriemens in einem Teilschnitt schematisch dargestellt, und zwar zeigt

Fig. 1 einen Ausschnitt eines Zahnriemens in Längsschnitt, dessen Zähne trapezförmigen Querschnitt haben, und

Fig. 2 eine stark schematisierte schaubildliche Ansicht eines als Gewebe ausgebildeten textilen Flächengebildes, das als Auflage und Verschleißschutz auf die Außenseite der Zähne des Zahnriemens gemäß Fig. 1 aufgebracht wird.

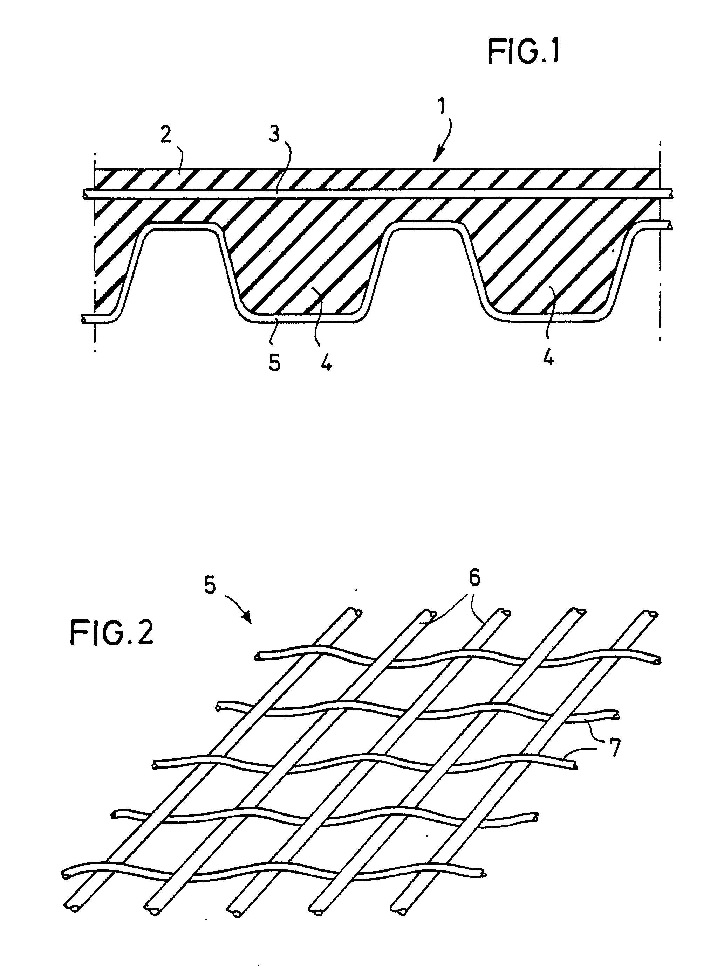

Ein in Fig. 1 in einem Teilausschnitt dargestellter Zahnriemen hat einen Körper (2) aus Gummi, das aus Chloropren-Kautschuk entstanden sein kann. In den Körper (2) sind litzen- oder kabelförmige Festigkeitsträger (3) eingebettet, die beispielsweise aus Glasfasern bestehen können. Senkrecht zur Zeichnungsebene sind in dem Körper (2) mehrere parallel zueinander liegende Festigkeitsträger (3) vorgesehen, die beispielsweise durch eine endlose Wicklung aus einer Glasfaser-Litze gebildet sind.

An den Körper (2) des Zahnriemens (1) sind einstückig Zähne (4) angeformt, die im dargestellten Beispiel trapezförmigen Querschnitt haben, jedoch auch andere Querschnittsformen aufweisen können.

Die Außenfläche der Zähne (4) ist über die gesamte Breite des Zahnriemens (1) mit einem textilen Flächengebilde (5) versehen, das eine verschleißfeste Oberfläche der Zähne (4) bildet und mittels einer in der Zeichnung nicht erkennbaren Lateximprägnierung auf den Zähnen (4) und dem Körper (2) des Zahnriemens (1) befestigt ist.

Fig. 2 zeigt, daß das textile Flächengebilde (5) die Form eines Gewebes aufweisen kann, dessen Kettfäden (6) aus verschleißfestem und gering dehnbarem Material bestehen, während die Schußfäden (7) plastisch dehnbar ausgebildet sind und eine wesentlich geringere Verschleißfestigkeit als die Kettfäden (6) haben.

Das textile Flächengebilde (5) ist derart auf den Zähnen (4) des Zahnriemens (1) angeordnet, daß sich die Kettfäden senkrecht zur Zeichnungsebene erstrecken, während die Schußfäden in bzw. parallel zur Zeichnungsebene verlaufen. Die Schußfäden erstrecken sich somit in Längsrichtung oder Umfangsrichtung des endlosen Zahnriemens (1), während sich die Kettfäden (6) senkrecht hierzu und somit über die Breite des Zahnriemens (1) erstrecken.

**Ansprüche**

1. Verfahren zum Herstellen von Zahnriemen od.dgl., bei dem auf eine den Zahnformen entsprechende Vertiefungen enthaltende endlose Unterlage ein in Längsrichtung dehnbares textiles Flächengebilde glatt aufgelegt, auf dieses textile Flächengebilde Kautschuk aufgebracht, danach ein litzenförmiger Zugkörper unter Zugspannung endlos auf den Kautschuk aufgewickelt und dabei der Kautschuk mit dem textilen Flächengebilde unter Längsdehnung desselben in die Vertiefungen der Unterlage gedrückt wird, woraufhin eine den Zugkörper überdeckende Rückenschicht aus Kautschuk aufgebracht und das Ganze schließlich vulkanisiert wird, **dadurch gekennzeichnet,** daß als textiles Flächengebilde ein plastisch verformbare, sich in Längsrichtung des Zahnriemens erstreckende Fäden, die sich beim Dehnen des textilen Flächengebildes dauerhaft längen, enthaltendes textiles Flächengebilde mit in Querrichtung verlaufenden verschleißfesten Fäden verwendet wird und daß als Haftmittel zwischen dem textilen Flächengebilde und dem Kautschuk bzw. Gummi der Zähne des Zahnriemens Latex entweder vor dem Aufbringen des Kautschuks auf das über die Vertiefungen der Unterlage gespannte textile Flächengebilde aufgebracht oder das textile Flächengebilde vor dem Auflegen auf die Unterlagen mit Latex imprägniert wird.

2. Verfahren nach Anspruch 1, dadurch gekennzeichnet, daß als plastisch dehnbare Fäden des textilen Flächengebildes Fäden aus nicht oder nicht vollständig verstrecktem Material verwendet werden, die eine fast kraftlose bzw. praktisch widerstandslose Längen-Dehnbarkeit von wenigstens 50 % und eine Bruchdehnung von wenigstens 140 % aufweisen.

3. Verfahren nach Anspruch 2, dadurch gekennzeichnet, daß die Bruchdehnung der plastisch dehnbaren Fäden wenigstens 150 % beträgt.

4. Verfahren nach einem der Ansprüche 1 bis 3, dadurch gekennzeichnet, daß als plastisch dehnbare Fäden aus teilverstrecktem Nylon wie Nylon 6.6, Polyester oder anderen Polymeren bestehende Fäden oder Filamente verwendet werden.

5. Verfahren nach einem der Ansprüche 1 bis 4, dadurch gekennzeichnet, daß das textile Flächengebilde vor dem Einbau mit einem RFL-System (Resozin-Formaldehyd-Latex) ausgerüstet wird.

6. Zahnriemen od.dgl., hergestellt nach dem Verfahren aus einem der Ansprüche 1 bis 5, mit einem aus Gummi bestehenden, einen glatten Rücken und eine gezahnte Innenseite aufweisenden Körper, in dem ein kabel- oder litzenförmiger Zugkörper eingebettet ist und dessen Zähne auf ihrer Oberfläche mit einem als Verschleißschicht dienenden textilen Flächengebilde versehen sind, **dadurch gekennzeichnet,** daß das textile Flächengebilde (5) in Längsrichtung des Zahnriemens (1) plastisch dehnbare Fäden (7) aufweist und mit einem auf den Kautschuk bzw. den daraus vulkanisierten Gummi des Zahnriemen-Körpers (2) abgestellten Latex imprägniert ist.

7. Zahnriemen nach Anspruch 6, dadurch gekennzeichnet, daß das textile Flächengebilde (5) sich in Querrichtung des Zahnriemens (1) erstreckende Verschleißelemente (6) aus natürlichen, künstlichen und/oder synthetischen Fasern und/oder Faserstoffen (Filamenten) aufweist.

8. Zahnriemen nach Anspruch 6 oder 7, dadurch gekennzeichnet, daß das textile Flächengebilde (5) hitzeresistente Materialien (HR-Materialien) enthält.

9. Zahnriemen nach einem der Ansprüche 6 bis 8, dadurch gekennzeichnet, daß das textile Flächengebilde (5) ein Gewebe ist, dessen Schuß aus plastisch dehnbaren Fäden (7) und dessen Kette aus gering dehnbaren verschleißfesten Fäden (6) besteht.

FIG.1

FIG.2

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 084 978 (MITSUBISHI BELTING LTD) <br> * Das ganze Dokument * <br> --- | 1-9 | B 29 D 29/08 <br> F 16 G 1/28 |
| A | DE-A-3 206 160 (W.H. MÜLLER & CO. KG) <br> * Das ganze Dokument * <br> --- | 1-9 | |
| A | FR-A-1 210 936 (GOODYEAR TIRE & RUBBER CO.) <br> * Das ganze Dokument, insbesondere Seite 2, Zeilen 27-55; Seite 2, Zeilen 105-110; Figuren 12,13 * <br> --- | 1-9 | |
| A | EP-A-0 139 341 (MITSUBISHI BELTING LTD) <br> * Das ganze Dokument * <br> --- | 1-9 | |
| A | EP-A-0 138 466 (MITSUBISHI BELTING LTD) <br> * Das ganze Dokument * <br> --- | 1-9 | |
| A | LU-A- 69 081 (INDUSTRIE PIRELLI S.p.A.) <br> * Das ganze Dokument * <br> --- | 1-9 | **RECHERCHIERTE SACHGEBIETE (Int. Cl.4)** <br><br> B 29 D <br> F 16 G |
| A | EP-A-0 259 141 (MITSUBISHI BELTING LTD) <br> * Das ganze Dokument * <br> --- | 1-9 | |
| A | US-A-4 302 197 (K. KIMURA) <br> * Das ganze Dokument * <br> --- | 1-9 | |
| A | US-A-2 746 308 (J. ADAMS Jr.) <br> * Das ganze Dokument * <br> --- -/- | 1,6 | |

Der vorliegende Recherchenbericht wurde für alle Patentansprüche erstellt

| Recherchenort | Abschlußdatum der Recherche | Prüfer |
|---|---|---|
| DEN HAAG | 09-02-1989 | GOURIER P.A. |

| | **Europäisches Patentamt** | **EUROPÄISCHER RECHERCHENBERICHT** | | |
|---|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 8, Nr. 116 (M-299)[1553], 30. Mai 1984; & JP-A-59 23 143 (MITSUBISHI BELT K.K.) 06.02.1984 ----- | | |
| | | | **RECHERCHIERTE SACHGEBIETE (Int. Cl.4)** |

Der vorliegende Recherchenbericht wurde für alle Patentansprüche erstellt

| Recherchenort | Abschlußdatum der Recherche | Prüfer |
|---|---|---|
| DEN HAAG | 09-02-1989 | GOURIER P.A. |

EPO FORM 1503 03.82 (P0403)